# EUROPEAN PATENT SPECIFICATION

(11) **EP 3 030 772 B1**
(45) Date of publication and mention of the grant of the patent: **04.10.2017**
(21) Application number: 13759262.2
(22) Date of filing: 09.08.2013
(51) Int. Cl.: F02D 41/22, F02N 11/10, F02P 11/02, F02P 13/00, F02P 19/02, F02D 35/02

(54) **AN INTERNAL COMBUSTION ENGINE WITH A LIQUID DETECTION SYSTEM**
BRENNKRAFTMASCHINE MIT FLÜSSIGKEITSDETEKTIONSSYSTEM
MOTEUR À COMBUSTION INTERNE À SYSTÈME DE DÉTECTION DE LIQUIDE

(43) Date of publication of application: 15.06.2016
(73) Proprietor: Wärtsilä Finland Oy, 65380 Vaasa (FI)
(72) Inventor: PAVAN, Emanuele, I-34018 Trieste (IT); MILOCCHI, Marco, I-34018 Trieste (IT)
(74) Representative: Berggren Oy, Helsinki & Oulu
(86) International application number: PCT/FI2013/050789
(87) International publication number: WO 2015/018966

(56) References cited:
- WO-A1-2012/171049
- JP-B2- 3 258 608
- US-A- 4 558 280
- US-A- 5 534 781
- US-A- 5 873 340
- US-A1- 2004 083 794

## Description

### Field of technology

The present invention relates to an internal combustion engine with a liquid detection system.

### Prior art

An internal combustion engine may meet a risk of having liquid in one or more of its cylinders. The liquid such as water may originate from leakage of the cylinder head gasket, and also from other reasons like leaking exhaust valve seat or leaking pre-combustion chamber gasket in a gas engine. In case of oil leakage, the source may be a leaking diesel fuel injector or lube oil coming from injector cooling circuit or from piston cooling. The liquid in the cylinder, i.e. in the combustion chamber increases the cylinder pressure in the compression stage due to its non-compressibility. In the worst case the liquid fills a great part of the cylinder, or even exceeds the volume of the combustion chamber in the top dead centre position of the piston, which causes a powerful pressure stroke in the cylinder, when the engine is rotated, for example, for starting purpose. Such a pressure stroke can incur damages in the cylinder and other engine components, like the cylinder head gasket, the piston, the piston rings, the piston pin, the connecting rod and its bearings, and the crank shaft and its bearings, and also bearing blocks.

It is known to check oil or water leakage of a cylinder relying on sense of sight. It is also known to use a system having a cylinder specific sensor, for example photoelectric sensor, in connection with the cylinder for indicating the leakage as disclosed in JP 3258608 publication.

### Short description

The aim of the invention is to provide an alternative solution to detect liquid in a cylinder/s. The solution according to the invention is also a simple and does not require relatively complicated arrangements.

The aim is achieved in a way described in the independent claim. The dependent claims illustrate different embodiments of the invention. An internal combustion engine according to the invention with a liquid detection arrangement detects undesired liquid in at least one cylinder of the engine. The arrangement comprises two electrodes cylinder specifically installed in a combustion chamber of the cylinder. The electrodes are connected to a power supply and a measurement part to detect conductivity through two electrodes in the combustion chamber. The arrangement comprises also a control unit to receive measurements of the measuring part, which control unit comprises a comparison unit to compare values of the measurements with a threshold value indicating conductivity through two electrodes. The control unit is arranged to stop rotation of a crank shaft of the internal combustion engine if the comparison reveals that the measurement value exceeds the threshold value.

### List of figures

In the following, the invention is described in more detail by reference to the enclosed drawings, where
- Figure 1: illustrates an example of the invention,
- Figure 2: illustrates another example of the invention,
- Figure 3: illustrates a part of the invention,
- Figure 4: illustrates an embodiment of a circuit arrangement according to the invention,
- Figure 5: illustrates another embodiment of a circuit arrangement according to the invention,
- Figure 6: illustrates an example of a spark plug, and
- Figure 7: illustrates an example of an embodiment of the electrodes according to the invention.

### Description of the drawings

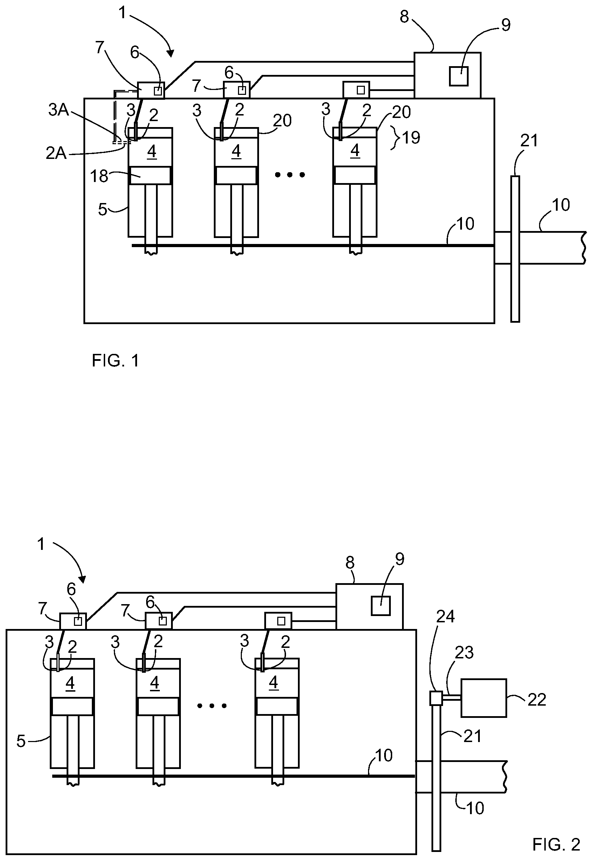

Figure 1 illustrates an example of the internal combustion engine 1 according to the invention. The engine can be a reciprocating combustion engine such as a diesel engine. The engine has a liquid detection arrangement to detect undesired liquid in at least one cylinder of the engine. The arrangement comprises two electrodes 2, 3 cylinder specifically installed in a combustion chamber 4 of the cylinder 5. The electrodes are connected to a power supply 6 and a measurement part 7 to detect conductivity through two electrodes 2, 3 in the combustion chamber 4.

The arrangement comprises also a control unit 8 to receive measurements of the measuring part 7. The control unit comprises a comparison unit 9 to compare values of the measurements with a threshold value indicating conductivity through two electrodes 2, 3. The control unit 8 is arranged to stop rotation of a crank shaft 10 of the internal combustion engine if the comparison reveals that the measurement value exceeds the threshold value.

The electrodes 2, 3 can be situated in the top part 19 of the cylinder 5. The electrodes can be installed in a cylinder head 20 or in a side wall of the cylinder as showed 2A, 3A as dashed lines in Figure 1. The both ways are considered to be installation possibilities in the body of the cylinder. Also the middle part and the bottom part of the cylinder can be considered as installation places for the electrodes. The top part is considered to be a suitable place because the volume of the combustion chamber is at the minimum volume at the top of the cylinder due to movement of the cylinder 18.

The pistons 18 are in connection with the crank shaft 10 of the engine that projects outside the engine. The projecting part of the crank shaft has usually provided with a flywheel 21.

Figure 2 shows another embodiment of the invention wherein the internal combustion engine 1 with a liquid detection arrangement comprises also an electric motor 22 to rotate a crank shaft 10 of the internal combustion engine 1. The electric motor is used to rotate the crank shaft slowly before an actual start of the engine. The slow rotation provides safer condition to detect liquid like water in the cylinder than just starting the engine. The pressure in the cylinder does not rise so fast when the crank shaft is rotated slowly. It is practical that the shaft 23 of the electric engine 22 is connected to a transmission wheel 24 that is in connection with the flywheel 21. The rotation of the crank shaft 10 provides back and worth movements of the pistons 18.

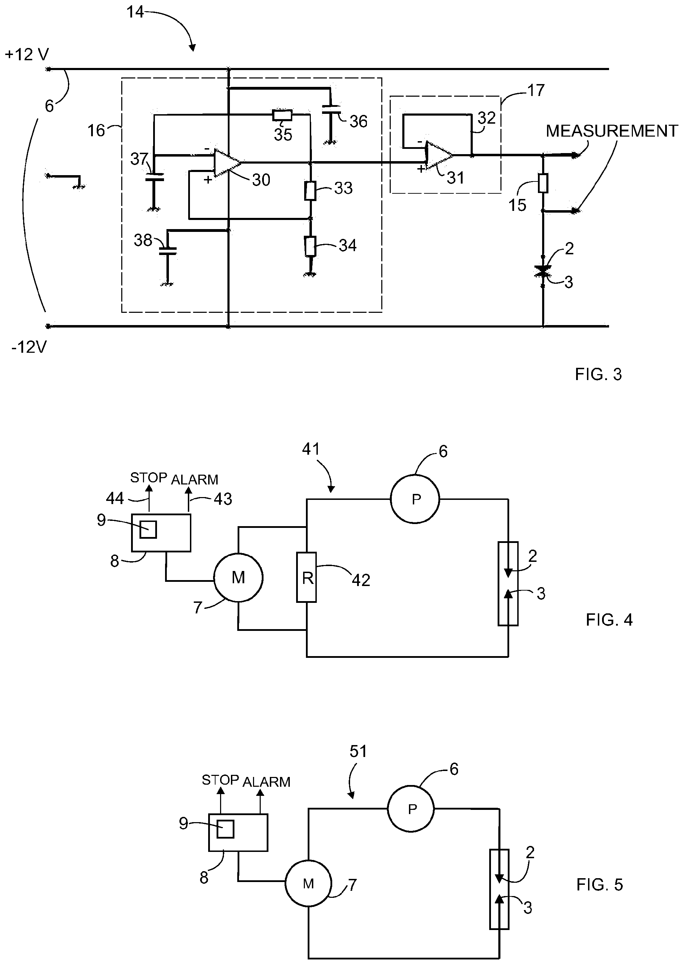

Figure 3 shows a more detailed example how the detection arrangement can be constructed. The liquid detection arrangement comprises a circuit 14 having said two electrodes 2, 3 and said power supply 6. The circuit also comprises a resistor 15 in series with the electrodes, a current source circuit 16 and a buffer circuit 17. The power supply 6 is connected to the current source circuit 16 that is connected to the buffer circuit 17. The buffer circuit supplies current through the resistor 15 and the electrodes 2, 3. The measuring part 7 is arranged to measure voltage over the resistor 15.

As can be seen from Figure 3, the power source provides in this example voltage between 12 V and -12 V to the circuit 14. The current source circuit is for stabilizing the current that flows vie the resistor when the current goes through the electrodes 2, 3. The buffer circuit also stabilises the circuit. The stabilisation is beneficial, because the current can be zero (no conductivity between the electrodes) or full possible current through the resistor 15 (full conductivity between the electrodes). Therefore the current source circuit provides current that is predictable even if the load of the current source circuit changes suddenly. The electrodes 2, 3 can be seen as a switch being ON (the current flows through the electrodes) or OFF (the current does not flow through the electrodes). Because the current has been stabilized, the measurement over the resistor 15 is more reliable. The current through the resistor (and the electrodes 2, 3) can be measured by measuring the voltage over the resistor 15 when the value of resistor 15 is known. For example, when the resistance is 2,2 kΩ in Figure 3, the current is roughly 0.01 A in case the electrodes are ON.

In the example of Figure 3 the buffer circuit 17 comprises a negative feedback 32 to the operational amplifier 31. The current source circuit 16 has also a negative feedback through a resistor 35 with a filtering capacitor 37 to the ground. The current source circuit 16 has also a positive feedback through a resistor 33 with a voltage divider resistor 34 to the ground. The power supplies lines to the operational amplifier 30 are provided with capacitors 36, 38 to the ground.

Figure 4 shows a more schematic circuit example than Figure 3. The example of Figure 4 shows that the liquid detection arrangement comprises a circuit 41 having said two electrodes 2, 3 and power supply 6, and a resistor 42. The measuring part 7 is arranged to measure voltage over the resistor. It may also be possible that the measurement part measures voltage over the circuit.

Figure 5 shows another example of a schematic circuit. The liquid detection arrangement according to Figure 5 comprises a circuit 51 having said two electrodes 2, 3 and said power supply 6. The measuring part 7 can be arranged to measure the resistance over the electrodes 2, 3. In this case, it is practical that the power supply 6 and the measuring part 7 forms a single measurement device for measuring resistance over the electrodes. Similarly, the power supply 6 and the measuring part 7 can provide a measurement device for measuring current over the electrodes. Referring to Figure 1 and 2, the measuring part and the power supply can be integrated into one entity in a practical way.

Figures 4 and 5 illustrate also that the control unit 8 is also arranged to provide an alarm 43 when the threshold is exceeded. As said above, the control unit stops 44 the rotation of the crank shaft when the threshold is exceeded.

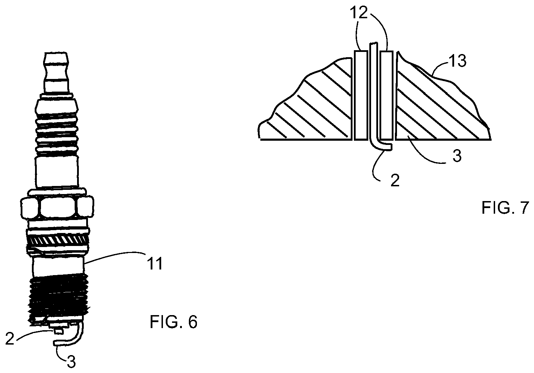

When constructing a liquid detection arrangement according to the invention, it is practical that two electrodes 2, 3 are provided by the spark plug 11 installed in the cylinder 5. A typical spark plug is illustrated in Figure 6. The spark plugs are relatively cost-effective and they have a good resistant against high pressure conditions. Further, they can be easily installed because there exist suitable milling tools to make bores and threads for the spark plug.

There are also other ways to form the electrodes for the liquid detection arrangement. Figure 7 shows another example of an embodiment of the electrodes. In this example one of said electrodes 3 is the body 13 of the cylinder 5 and the other electrode 2 is a metal part that is electrically isolated 12 from the body 13 of the cylinder. In this embodiment the isolated electrode 2 has been bent towards the body of the cylinder.

As can be noted from the examples above, the conductivity over the electrodes can be measured in a different ways. When water or other conductive liquid exists in the cylinder, there is electric connection between the electrodes, and the current flows through them. If water does not exists in the cylinder there is no electric connection, and the current does not flow. As said above the conductivity over the electrodes (and water in the cylinder) can be detected by measuring voltage, current or resistance that depends on conductivity over the electrodes.

As said above the control unit 8 gives a stop command if water (or other conductive liquid) is detected in the cylinder. The stop command drives the rotation of the crank shaft to be stopped. So, the engine itself of the above said electric motor or another device rotating the crank shaft is stopped. It can be practical that the electric motor another device or the engine itself is rotated in a certain period. In this period it is possible to detect possible liquid in one or more cylinders.

The figures of this description are schematic figures mostly for illustrating the invention. So the invention can be realized in many other ways than described above. For example, the control unit can also be a learning control unit. This means that the control unit can learn situations where certain amounts of liquid exist in one or more cylinders. The construction of the electrodes can be different than illustrated in the examples above. The electrodes can be situated in all cylinders or at least in one cylinder of the engine. It may be predictable that a certain cylinder of the engine may have water in the cylinder and the other cylinders will not have water, in which case all cylinders does not need to equipped with the electrodes. In case the engine is a diesel engine, fuel can, for example, be HFO (Heavy Fuel Oil) or LFO (Light Fuel Oil) oil without changing the functioning of the invention.

It is evident from the above that the invention is not limited to the embodiments described in this text but can be implemented in many other different embodiments within the scope of the independent claims.

## Claims

1. An internal combustion engine (1) with a liquid detection arrangement to detect undesired liquid in at least one cylinder of the engine, **characterised in that** the arrangement comprises two electrodes (2, 3) cylinder specifically installed in a combustion chamber (4) of the cylinder (5), the electrodes being connected to a power supply (6) and a measurement part (7) to detect conductivity through two electrodes (2, 3) in the combustion chamber (4),
and a control unit (8) to receive measurements of the measuring part (4), which control unit comprises a comparison unit (9) to compare values of the measurements with a threshold value indicating conductivity through two electrodes (2, 3), the control unit (8) being arranged to stop rotation of a crank shaft (10) of the internal combustion engine if the comparison reveals that the measurement value exceeds the threshold value.

2. An internal combustion engine (1) with a liquid detection arrangement according to Claim 1, **characterised in that** two electrodes (2, 3) are provided by the spark plug (11) installed in the cylinder (5).

3. An internal combustion engine (1) with a liquid detection arrangement according to Claim 1, **characterised in that** one of said electrodes (3) is the body (13) of the cylinder (5) and the other electrode (2) is a metal part that is electrically isolated (12) from the body (13) of the cylinder.

4. An internal combustion engine (1) with a liquid detection arrangement according to any of Claims 1 to 3, **characterised in that** the liquid detection arrangement comprises a circuit (14) having said two electrodes (2, 3) and said power supply (6), and also comprising a resistor (15) in series with the electrodes, a current source circuit (16) and a buffer circuit (17), the power supply (6) being connected to the current source circuit (16) that is connected to the buffer circuit (17), the buffer circuit supplying current through the resistor (15) and the electrodes (2, 3), the measuring part (7) being arranged to measure voltage over the resistor (159).

5. An internal combustion engine (1) with a liquid detection arrangement according to any of Claims 1 to 3, **characterised in that** that the liquid detection arrangement comprises a circuit (51) having said two electrodes (2, 3), said power supply (6), the measuring part (7) being arranged to measure resistance over the electrodes (2, 3).

6. An internal combustion engine (1) with a liquid detection arrangement according to any of Claims 1 to 3, **characterised in that** the liquid detection arrangement comprises a circuit (41) having said two electrodes (2, 3) and power supply (6), and a resistor (42) the measuring part (7) being arranged to measure voltage over the resistor.

7. An internal combustion engine (1) with a liquid detection arrangement according to any of the Claims from 2 to 6, **characterised in that** the electrodes (2, 3) are situated in the top part (19) of the cylinder (5).

8. An internal combustion engine (1) with a liquid detection arrangement according to Claim 7, **characterised in that** the electrodes (2, 3) are situated in a cylinder head (20).

9. An internal combustion engine (1) with a liquid detection arrangement according to any of the Claims from 1 to 8, **characterised in that** it comprises an electric motor (22) to rotate a crank shaft (10) of the internal combustion engine (1).

10. An internal combustion engine (1) with a liquid detection arrangement according to any of the Claims from 1 to 9, **characterised in that** the control unit (8) is also arranged to provide an alarm (43) and/or a STOP (44) when the threshold is exceeded.

## Patentansprüche

1. Verbrennungsmotor (1) mit einer Flüssigkeitserfassungsanordnung, um ungewünschte Flüssigkeit in mindestens einem Zylinder des Motors zu erfassen, **dadurch gekennzeichnet, dass** die Anordnung zwei Elektroden (2, 3) umfasst, die zylinderspezifisch in einer Brennkammer (4) des Zylinders (5) installiert sind, wobei die Elektroden mit einer Stromversorgung (6) und einem Messteil (7) verbunden sind, um eine Leitfähigkeit durch zwei Elektroden (2, 3) in der Brennkammer (4) zu erfassen,
und eine Steuereinheit (8), um Messungen von dem Messteil (4) zu empfangen, wobei die Steuereinheit eine Vergleichseinheit (9) umfasst, um Werte der Messungen mit einem Schwellenwert zu vergleichen, die eine Leitfähigkeit durch zwei Elektroden (2, 3) anzeigen, wobei die Steuereinheit (8) angeordnet ist, um eine Drehung einer Kurbelwelle (10) des Verbrennungsmotors anzuhalten, wenn der Vergleich ergibt, dass der Messwert den Schwellenwert überschreitet.

2. Verbrennungsmotor (1) mit einer Flüssigkeitserfassungsanordnung nach Anspruch 1, **dadurch gekennzeichnet, dass** zwei Elektroden (2, 3) durch die Zündkerze (11) bereitgestellt sind, die in dem Zylinder (5) installiert ist.

3. Verbrennungsmotor (1) mit einer Flüssigkeitserfassungsanordnung nach Anspruch 1, **dadurch gekennzeichnet, dass** eine der Elektroden (3) der Körper (13) des Zylinders (5) ist und die andere Elektrode (2) ein Metallteil ist, das von dem Körper (13) des Zylinders elektrisch isoliert (12) ist.

4. Verbrennungsmotor (1) mit einer Flüssigkeitserfassungsanordnung nach einem der Ansprüche 1 bis 3, **dadurch gekennzeichnet, dass** die Flüssigkeitserfassungsanordnung eine Schaltung (14) umfasst, die die zwei Elektroden (2, 3) und die Stromversorgung (6) hat und ebenfalls einen Widerstand (15) in Reihe mit den Elektroden, eine Stromquellenschaltung (16) und eine Pufferschaltung (17) umfasst, wobei die Stromversorgung (6) mit der Stromquellenschaltung (16) verbunden ist, die mit der Pufferschaltung (17) verbunden ist, wobei die Pufferschaltung durch den Widerstand (15) und die Elektroden (2, 3) Strom liefert, wobei das Messteil (7) angeordnet ist, um Spannung über dem Widerstand (159) zu messen.

5. Verbrennungsmotor (1) mit einer Flüssigkeitserfassungsanordnung nach einem der Ansprüche 1 bis 3, **dadurch gekennzeichnet, dass** die Flüssigkeitserfassungsanordnung eine Schaltung (51) umfasst, die die zwei Elektroden (2, 3) und die Stromversorgung (6) hat, wobei das Messteil (7) angeordnet ist, um einen Wirkwiderstand über den Elektroden (2, 3) zu messen.

6. Verbrennungsmotor (1) mit einer Flüssigkeitserfassungsanordnung nach einem der Ansprüche 1 bis 3, **dadurch gekennzeichnet, dass** die Flüssigkeitserfassungsanordnung eine Schaltung (41) umfasst, die die zwei Elektroden (2, 3) und die Stromversorgung (6) und einen Widerstand (42) hat, wobei das Messteil (7) angeordnet ist, um Spannung über dem Widerstand zu messen.

7. Verbrennungsmotor (1) mit einer Flüssigkeitserfassungsanordnung nach einem der Ansprüche 2 bis 6, **dadurch gekennzeichnet, dass** sich die Elektroden (2, 3) in dem oberen Teil (19) des Zylinders (5) befinden.

8. Verbrennungsmotor (1) mit einer Flüssigkeitserfassungsanordnung nach Anspruch 7, **dadurch gekennzeichnet, dass** sich die Elektroden (2, 3) in einem Zylinderkopf (20) befinden.

9. Verbrennungsmotor (1) mit einer Flüssigkeitserfassungsanordnung nach einem der Ansprüche 1 bis 8, **dadurch gekennzeichnet, dass** er einen Elektromotor (22) umfasst, um eine Kurbelwelle (10) des Verbrennungsmotors (1) zu drehen.

10. Verbrennungsmotor (1) mit einer Flüssigkeitserfassungsanordnung nach einem der Ansprüche 1 bis 9, **dadurch gekennzeichnet, dass** die Steuereinheit (8) ebenfalls angeordnet ist, um einen Alarm (43) und/oder ein HALT (44) bereitzustellen, wenn die Schwelle überschritten ist.

## Revendications

1. Moteur à combustion interne (1) comprenant un agencement de détection de liquide pour détecter du liquide non souhaité dans au moins un cylindre du moteur, **caractérisé en ce que** l'agencement comprend deux cylindres à électrodes (2, 3) spécifiquement installés dans une chambre à combustion (4) du cylindre (5), les électrodes étant connectées à une alimentation électrique (6) et à une partie de mesure (7) pour détecter la conductivité à travers deux électrodes (2, 3) dans la chambre de combustion (4),
et une unité de commande (8) pour recevoir des mesures de la partie de mesure (4), laquelle unité de commande comprend une unité de comparaison (9) pour comparer des valeurs des mesures à une valeur-seuil indiquant la conductivité à travers deux électrodes (2, 3), l'unité de commande (8) étant agencée pour arrêter la rotation d'un vilebrequin (10) du moteur à combustion interne si la comparaison révèle que la valeur de mesure dépasse la valeur-seuil.

2. Moteur à combustion interne (1) comprenant un agencement de détection de liquide selon la revendication 1, **caractérisé en ce que** les deux électrodes (2, 3) sont fournies par la bougie d'allumage (11) installée dans le cylindre (5).

3. Moteur à combustion interne (1) comprenant un agencement de détection de liquide selon la revendication 1, **caractérisé en ce qu'**une des deux électrodes (3) est le corps (13) du cylindre (5) et l'autre électrode (2) est une pièce métallique qui est isolée électriquement (12) du corps (13) du cylindre.

4. Moteur à combustion interne (1) comprenant un agencement de détection de liquide selon l'une quelconque des revendications 1 à 3, **caractérisé en ce que** l'agencement de détection de liquide comprend un circuit (14) présentant lesdites deux électrodes (2, 3) et ladite alimentation électrique (6), et comprenant également une résistance (15) en série avec les électrodes, un circuit de source de courant (16) et un circuit tampon (17), l'alimentation électrique (6) étant connectée au circuit de source de courant (16) qui est connecté au circuit tampon (17), le circuit tampon fournissant du courant à travers la résistance (15) et les électrodes (2, 3), la partie de mesure (7) étant agencée pour mesurer la tension sur la résistance (159).

5. Moteur à combustion interne (1) comprenant un agencement de détection de liquide selon l'une quelconque des revendications 1 à 3, **caractérisé en ce que** l'agencement de détection de liquide comprend un circuit (51) présentant lesdites deux électrodes (2, 3), ladite alimentation électrique (6), la partie de mesure (7) étant agencée pour mesurer la résistance sur les électrodes (2, 3).

6. Moteur à combustion interne (1) comprenant un agencement de détection de liquide selon l'une quelconque des revendications 1 à 3, **caractérisé en ce que** l'agencement de détection de liquide comprend un circuit (41) présentant lesdites deux électrodes (2, 3) et l'alimentation électrique (6), et une résistance (42) et la partie de mesure (7) étant agencée pour mesurer la résistance sur la résistance.

7. Moteur à combustion interne (1) comprenant un agencement de détection de liquide selon l'une quelconque des revendications 2 à 6, **caractérisé en ce que** les électrodes (2, 3) sont situées dans la partie supérieure (19) du cylindre (5).

8. Moteur à combustion interne (1) comprenant un agencement de détection de liquide selon la revendication 7, **caractérisé en ce que** les électrodes (2, 3) sont situées dans une tête de cylindre (20).

9. Moteur à combustion interne (1) comprenant un agencement de détection de liquide selon l'une quelconque des revendications 1 à 8, **caractérisé en ce qu'**il comprend un moteur électrique (22) pour faire tourner un vilebrequin (10) du moteur à combustion interne (1).

10. Moteur à combustion interne (1) comprenant un agencement de détection de liquide selon l'une quelconque des revendications 1 à 9, **caractérisé en ce que** l'unité de commande (8) est également prévue pour fournir une alarme (43) et/ou un STOP (44) lorsque le seuil est atteint.
